# EUROPÄISCHE PATENTSCHRIFT

(11) **EP 0 710 334 B1**
(45) Veröffentlichungstag und Bekanntmachung des Hinweises auf die Patenterteilung: **21.10.1998**
(21) Anmeldenummer: 94924247.3
(22) Anmeldetag: 08.07.1994
(51) Int. Cl.: F16D 65/097

(54) **NIEDERHALTEFEDER FÜR SCHEIBENBREMSEN**
HOLDING-DOWN SPRING FOR DISK BRAKES
RESSORT DE MAINTIEN POUR FREINS A DISQUE

(30) Priorität: 26.07.1993 DE 4324989
(43) Veröffentlichungstag der Anmeldung: 08.05.1996
(73) Patentinhaber: ITT Automotive Europe GmbH, 60488 Frankfurt (DE); Gerhardt, Winfried, 60489 Frankfurt am Main (DE); Leidecker, Hans-Dieter, D-65931 Fankfurt am Main (DE)
(72) Erfinder: GERHARDT, Winfried, D-60489 Frankfurt am Main (DE); LEIDECKER, Hans-Dieter, D-65931 Frankfurt am Main (DE)
(86) Internationale Anmeldenummer: EP9402247
(87) Internationale Veröffentlichungsnummer: WO9503499

(56) Entgegenhaltungen:
- EP-A- 0 529 245
- DE-A- 2 038 649
- DE-A- 3 833 553

## Beschreibung

Die Erfindung betrifft eine Niederhaltefeder für die Bremsbeläge von Scheibenbremsen, insbesondere Festsattel-Scheibenbremsen für Kraftfahrzeuge, wobei zwei Bremsbeläge in einem Schacht eines Bremssattels angeordnet und mittels zweier Haltestifte befestigt sind, gemäß dem Oberbegriff des Patentanspruchs 1.

Eine gattungsgemäße Niederhaltefeder ist beispielsweise aus der DE 38 33 553 A1 bekannt. Bei der Montage der Bremsbeläge müssen diese zunächst in den Schacht des Bremssattels eingeführt werden. Danach kann der Monteur die Niederhaltefeder einsetzen, um anschließend die beiden Haltestifte in die dafür vorgesehenen Bohrungen einzustecken. Beim Einstecken der Haltestifte oder zumindest vor dem Einstecken des zweiten Haltestiftes müssen die bzw. das freie Ende des zur federnden Anlage an die Haltestifte bestimmten Klemmbügels der Niederhaltefeder elastisch vorgespannt werden, um den Einbauraum für die bzw. den Haltestift frei zu halten. Erst nachdem der letzte Haltestift montiert ist, kann der Monteur das oder die Enden des Klemmbügels loslassen, so daß diese federnd an den Haltestiften anliegen. Bei der Montage besteht nun aber die Gefahr, daß das zum Abbiegen bzw. Aufspreizen des Klemmbügels verwendete Werkzeug bei der Montage abrutscht oder daß der Monteur das Werkzeug falsch ansetzt und dabei die Niederhaltefeder plastisch verbiegt. Dabei treten unter Umständen Funktionsstörungen der Scheibenbremse auf und die Fertigungskosten werden erhöht.

In der EP 0 529 245 A1 wird ferner eine Spreizfeder mit radialer Niederhaltefunktion für die Bremsbacken einer Scheibenbremse offenbart, bei der die Abstützwirkung bzw. die Befestigung der Spreizfeder an den beiden Belaghaltestiften durch einen zusätzlichen Federarm verstärkt wird. Dieser zusätzliche Federarm ist einstückig an den Tangentialschenkel der Spreizfeder angeformt und umgreift den Umfang des Belaghaltestiftes zumindest teilweise. Trotz der zweifellos zufriedenstellenden Befestigung der Spreizfeder an den Haltestiften, ergeben sich auch für diese Anordnung die oben beschriebenen Montageprobleme für die Spreizfeder und die Haltestifte.

Aufgabe der Erfindung ist es, eine gattungsgemäße Niederhaltefeder zu verbessern, so daß sie einfacher, schneller und leichter in der Scheibenbremse montierbar ist.

Die Lösung der Aufgabe ergibt sich aus dem kennzeichnenden Teil des Hauptanspruchs. Im Prinzip besteht die erfindungsgemäße Lösung darin, an der Niederhaltefeder Ausnehmungen für den sicheren Eingriff eines darauf abgestimmten Montagewerkzeugs vorzusehen. Die erfindungsgemäßen Ausnehmungen sind an den leicht zugänglichen Enden des Klemmbügels angeordnet, die vom jeweiligen Haltestift in Umfangsrichtung seitlich abstehend angeordnet sind, so daß das Montagewerkzeug leicht angesetzt werden kann. Weiterhin sind die Ausnehmungen und das Montagewerkzeug derart ausgestaltet, daß der Monteur zum Aufspreizen des Klemmbügels nur eine einfache Handbewegung ausführen muß, die im wesentlichen darin besteht, das Montagewerkzeug heranzuführen und nach dem Aufsetzen auf den Klemmbügel in derselben Bewegungsrichtung noch ein Stück weiter zu drücken. Nach dem Einstecken der Haltestifte wird das Montagewerkzeug einfach in Gegenrichtung entfernt. Dann ist die Montage der Bremsbeläge abgeschlossen.

In einer einfachen Ausführungsform der Erfindung besteht die Niederhaltefeder aus zwei Streifen Federblech, die getrennt aus einem Rohblech ausgestanzt und zu einem Klemmbügel bzw. einem Niederhaltebügel geformt werden können, um anschließend miteinander vernietet zu werden.

Die erfindungsgemäß an den freien Enden des Klemmbügels angeordneten Ausnehmungen, sind in einer bevorzugten Ausführungsform als rechteckiger Durchbruch oder in einer weiteren vorteilhaften Variante als zwei seitliche Ausnehmungen ausgestaltet sind. Dabei empfiehlt es sich, die Enden des Klemmbügels auf das zu verwendende Montagewerkzeug derart abzustimmen, daß beim Aufspreizen des Klemmbügels gleichzeitig die freien Enden quer zur Spreizrichtung elastisch ausgelenkt werden. Dabei wird der für das Einführen der Haltestifte freigehaltene Einbauraum erweitert und eine Kollision zwischen Haltestift und Klemmbügel auch in ungünstigen Situationen wirkungsvoll verhindert.

Ausführungsbeispiele der Erfindung werden nachfolgend anhand der Zeichnungen näher erläutert.

Es zeigen:
- Figur 1: eine Draufsicht auf eine Festsattel-Scheibenbremse mit einer fertig montierten erfindungsgemäßen Niederhaltefeder,
- Figur 2: eine vergrößerte Draufsicht auf einen Klemmbügel der Niederhaltefeder,
- Figur 3: eine Seitenansicht des Klemmbügels von Figur 2,
- Figur 4: eine vergrößerte Teilansicht des Klemmbügels im Schnitt gemäß Linie A-A von Figur 2 zusammen mit einer Teilansicht eines Montagewerkzeugs,
- Figur 5: eine Teilansicht ähnlich Figur 2 einer anderen Ausführungsform des Klemmbügels.

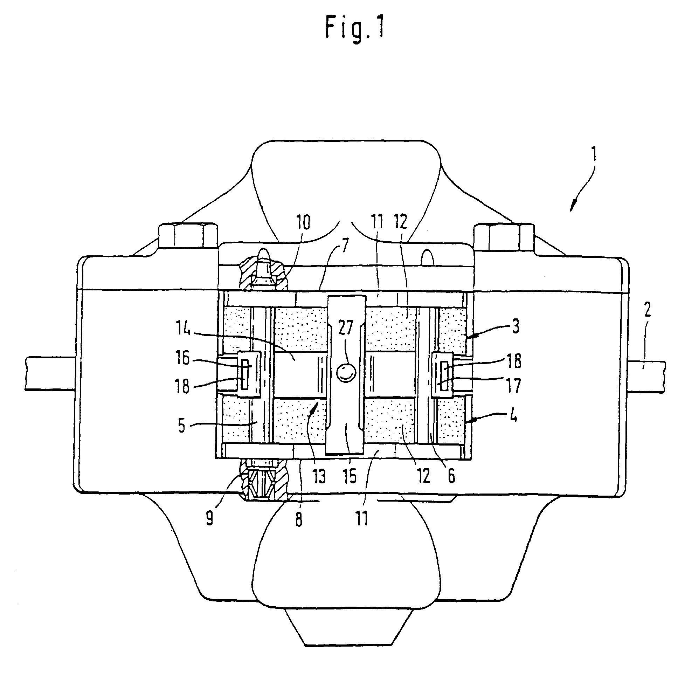

In Figur 1 erkennt man den Bremssattel 1 einer Scheibenbremse, der den äußeren Rand einer Bremsscheibe 2 und zwei beiderseits der Bremsscheibe 2 angeordnete Bremsbeläge 3, 4 umgreift. Die Bremsbeläge 3, 4 sind zur Montage radial von außen in einen Schacht des Bremssattels 1 einführbar. In dem Schacht werden die Bremsbeläge 3, 4 mittels zweier Haltestifte 5, 6 befestigt, die parallel zur Bremsscheibenachse angeordnet sind und quer durch den Schacht verlaufen. In gegenüberliegenden Schachtwänden 7, 8 sind jeweils zwei Bohrungen 9 bzw. 10 vorgesehen, in die die Haltestifte 5, 6 eingesteckt und mittels Klemmsitz befestigt werden. Die Bremsbeläge 3, 4 bestehen jeweils aus einer Rückenplatte 11, auf dem je ein Reibbelag 12 befestigt ist. Die Rückenplatten 11 ragen seitlich über die Reibbeläge 12 hinaus und besitzen Öffnungen, durch die die Haltestifte 5, 6 hindurchragen, wobei die Bremsbeläge 3, 4 am Bremssattel 1 befestigt werden.

Zwischen den Bremsbelägen 3, 4 und dem Bremssattel 1, insbesondere den Haltestiften 5, 6 ist ein konstruktionsbedingtes Spiel vorgesehen. Um nun ein Klappern der Bremsbeläge 3, 4 aufgrund dieses Spiels zu vermeiden, ist im Schacht des Bremssattels 1 eine kreuzförmige Niederhaltefeder 13 angeordnet, die die Bremsbeläge 3, 4 gegenüber den Haltestiften 5, 6 verspannt. Die Niederhaltefeder 13 besteht im wesentlichen aus einem Klemmbügel 14, der in Umfangsrichtung der Bremsscheibe 2 angeordnet ist und mit seinen Endabschnitten die Haltestifte 5, 6 hintergreift, und einem quer zum Klemmbügel 14 angeordneten und mit diesem vernietenen Niederhaltebügel 15, dessen Endabschnitte radial federnd an den radial äußeren Schmalseiten der Rückenplatten 11 anliegt.

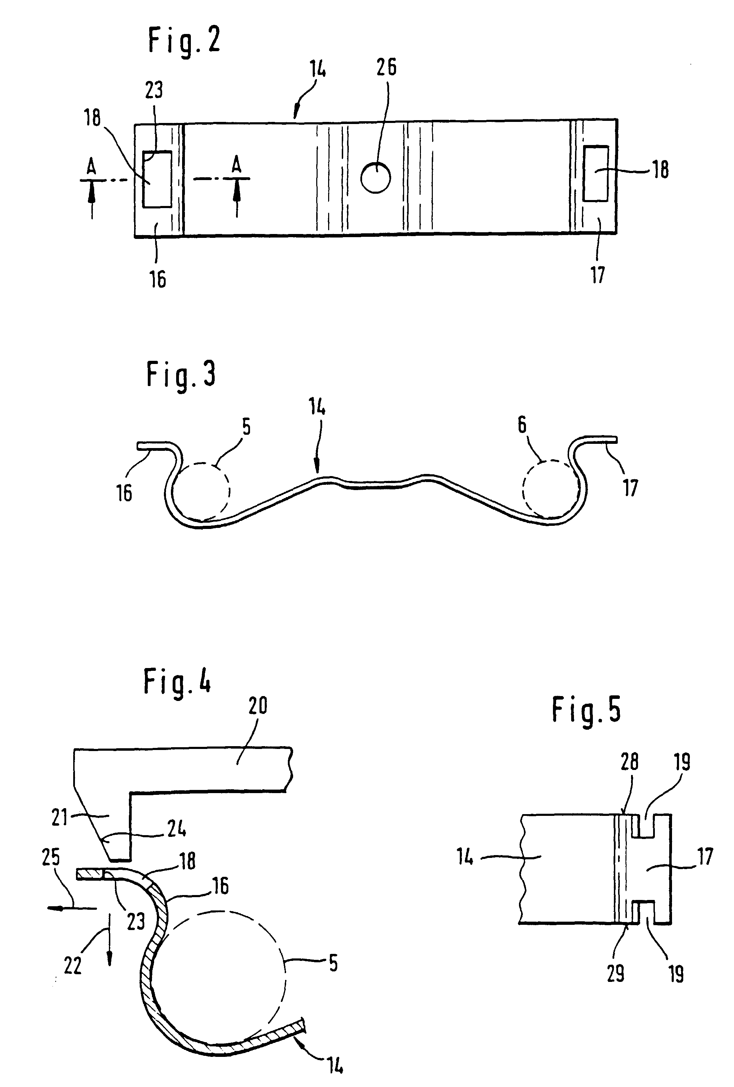

Wie man am besten in den Figuren 2 oder 4 erkennt, sind die Enden 16, 17 des Klemmbügels 14 mit Ausnehmungen 18 versehen, die zum Eingriff eines Montagewerkzeugs 20 vorgesehen sind. Das Montagewerkzeug 20 besitzt zumindest einen Rampenabschnitt 21, der in Pfeilrichtung 22 in die Ausnehmung einführbar ist, wobei eine innere Kante 23 der Ausnehmung 18 an der Rampe 24 des Rampenabschnitts 21 entlang gleitet und das Ende 16 des Klemmbügels 14 in Pfeilrichtung 25 verschiebt und vorspannt. Dabei wird der Klemmbügel 14 elastisch aufgespreizt, so daß die Haltestifte 5, 6 in ihre Einbauposition eingesteckt werden können, ohne die Niederhaltefeder 13 zu berühren. Nach dem Einstecken der Haltestifte 5, 6 wird das Montagewerkzeug 20 entgegen der Pfeilrichtung 22 entfernt, wobei sich die Endabschnitte des Klemmbügels 14 an die Haltestifte 5, 6 anlegen und diese gegen die Bremsbeläge 3, 4 verspannen. Damit ist die Montage der Bremsbeläge 3, 4 beendet.

Klemmbügel 14 und Niederhaltebügel 15 bestehen jeweils aus einem Streifen Federblech mit jeweils einer mittleren Bohrung 26 zum Durchgang eines Niets 27, das die beiden kreuzförmig zueinander angeordneten Blechstreifen zur vollständigen Niederhaltefeder 13 verbindet. Wie man am besten in Figur 3 erkennt, umgreifen die Endabschnitte des Klemmbügels 14 etwa den halben Umfang der Haltestifte 5, 6 und die freien Enden 16, 17 stehend seitlich vom jeweiligen Haltestift 5 oder 6 ab. Die Ausnehmungen 18 sind in den freien Enden 16, 17 vorgesehen.

In Figur 5 ist eine weitere Ausführungsform des Klemmbügels 14 dargestellt. An gegenüberliegenden äußeren Kanten 28, 29 des abstehenden Endes 17 sind hier zwei seitliche Ausnehmungen 19 für den Eingriff eines modifizierten Montagewerkzeugs angeordnet.

## Patentansprüche

1. Niederhaltefeder für Scheibenbremsen, bei denen zwei Bremsbeläge (3, 4) in einem Schacht eines Bremssattels (1) angeordnet und mittels zweier parallel zur Bremsscheibenachse quer durch den Schacht verlaufender Haltestifte (5, 6) befestigt sind, wobei die im wesentlichen kreuzförmige Niederhaltefeder (13) einen zum Hintergreifen der Haltestifte (5, 6) geeigneten Klemmbügel (14) und einen quer zum Klemmbügel (14) angeordneten und zum Andruck an die Schmalseiten der Bremsbeläge (3, 4) bestimmten Niederhaltebügel (15) aufweist, dadurch **gekennzeichnet**, daß die Enden (16, 17) des Klemmbügels (14) mit Ausnehmungen (18, 19) für den Eingriff eines Montagewerkzeugs (20) versehen sind und daß der Klemmbügel (14) mittels des Montagewerkzeugs (20) elastisch aufspreizbar ist, wobei der Klemmbügel (14) jeweils ungefähr den halben Umfang der Haltestifte (5, 6) umfaßt, und die freien Enden (16, 17) des Klemmbügels (14) vom jeweiligen Haltestift (5, 6) seitlich abstehen.

2. Niederhaltefeder nach Anspruch 1, dadurch **gekennzeichnet**, daß die Niederhaltefeder (13) aus Federblech besteht und daß der Klemmbügel (14) mit dem Niederhaltebügel (15) vernietet ist.

3. Niederhaltefeder nach Anspruch 1, dadurch **gekennzeichnet**, daß die nach außen abstehenden Enden (16, 17) jeweils mit einer als rechteckiger Durchbruch ausgebildeten Ausnehmung (18) für den Eingriff eines Montagewerkzeugs (20) versehen sind.

4. Niederhaltefeder nach Anspruch 1, dadurch **gekennzeichnet**, daß an gegenüberliegenden Kanten (28, 29) des abstehenden Endes (17) zwei seitliche Ausnehmungen (19) für den Eingriff eines Montagewerkzeugs angeordnet sind.

5. Niederhaltefeder nach einem der vorhergehenden Ansprüche, dadurch **gekennzeichnet**, daß die freien Enden (16, 17) des Klemmbügels (14) quer zur Spreizrichtung (25) elastisch auslenkbar sind.

## Claims

1. Holding-down spring for disc brakes, wherein two brake shoes (3, 4) are arranged in an aperture of a brake caliper (1) and are attached by two retaining pins (5, 6) which extend in parallel to the brake disc axis transversely through the aperture, wherein the generally cross-shaped holding-down spring (13) includes a securing clip (14) which is appropriate for backgripping the retaining pins (5, 6) and a holding-down clip (15) which is arranged transversely to the securing clip (14) and is intended for being applied against the narrow sides of the brake shoes (3, 4),
**characterized** in that the ends (16, 17) of the securing clip (14) include recesses (18, 19) for the application of a mounting tool (20), and in that the securing clip (14) is elastically expandable by way of the mounting tool (20), wherein the securing clip (14) embraces roughly half the circumference of the retaining pins (5, 6), and the free ends (16, 17) of the securing clip (14) project laterally from the respective retaining pin (5, 6).

2. Holding-down spring as claimed in claim 1,
**characterized** in that the holding-down spring (13) is made of spring plate, and in that the securing clip (14) is riveted to the holding-down clip (15).

3. Holding-down spring as claimed in claim 1,
**characterized** in that each of the outwardly projecting ends (16, 17) has a recess (18), configured as a square opening, for the application of a mounting tool (20).

4. Holding-down spring as claimed in claim 1,
**characterized** in that two lateral recesses (19) are arranged on opposed edges (28, 29) of the projecting end (17) for the application of a mounting tool.

5. Holding-down spring as claimed in any one of the preceding claims,
**characterized** in that the free ends (16, 17) of the securing clip (14) can be deflected elastically transversely to the expanding direction (25).

## Revendications

1. Ressort de maintien pour freins à disque, où deux plaquettes de frein (3, 4) sont disposées dans un puits d'un étrier de frein (1) et sont fixées au moyen de deux goupilles de maintien (5, 6) s'étendant parallèlement à l'axe du disque de frein et transversalement à travers le puits, le ressort de maintien (13) essentiellement configuré en forme de croix comportant un arceau de serrage (14) adapté pour s'engager sous les goupilles de maintien (5, 6), et un arceau d'appui (15) disposé transversalement à l'arceau de serrage (14) et destiné à s'appuyer sur les faces de chant des plaquettes de frein (3, 4),
caractérisé en ce que les extrémités (16, 17) de l'arceau de serrage (14) sont pourvues d'évidements (18, 19) pour l'engagement d'un outil de montage (20), et en ce que l'arceau de serrage (14) peut être élastiquement écarté et ouvert au moyen de l'outil de montage (20), l'arceau de serrage (14) entourant à peu près la moitié de la périphérie des goupilles de maintien (5, 6), et les extrémités libres (16, 17) de l'arceau de serrage (14) étant espacées latéralement de la goupille de maintien correspondante (5, 6).

2. Ressort de maintien selon la revendication 1, caractérisé en ce que le ressort de maintien (13) est fabriqué en tôle ressort, et en ce que l'arceau de serrage (14) est relié par rivetage à l'arceau d'appui (15).

3. Ressort de maintien selon la revendication 1, caractérisé en ce que les extrémités (16, 17) saillant vers l'extérieur sont respectivement pourvues d'un évidement (18) réalisé sous forme d'une fenêtre rectangulaire permettant l'engagement d'un outil de montage (20).

4. Ressort de maintien selon la revendication 1, caractérisé en ce que deux évidements latéraux (19) sont respectivement prévus dans les bords opposés (28, 29) de l'extrémité saillante (17), permettant l'engagement d'un outil de montage.

5. Ressort de maintien selon l'une des revendications précédentes, caractérisé en ce que les extrémités (16, 17) de l'arceau de serrage (14) peuvent être élastiquement écartées transversalement au sens d'ouverture (25).
